# EUROPÄISCHE PATENTSCHRIFT

(11) **EP 4 599 300 B1**
(45) Veröffentlichungstag und Bekanntmachung des Hinweises auf die Patenterteilung: **07.10.2026**
(21) Anmeldenummer: 23804948.0
(22) Anmeldetag: 03.11.2023
(51) Int. Cl.: G05B 19/042, G05B 23/02

(54) **COMPUTERIMPLEMENTIERTES VERFAHREN ZUR ERZEUGUNG EINER ANLAGENBILD-HIERARCHIE FÜR EIN BEDIENEN UND BEOBACHTEN EINER VERFAHRENSTECHNISCHEN ANLAGE SOWIE ENGINEERING-SYSTEM**
COMPUTER-IMPLEMENTED METHOD FOR CREATING A HIERARCHY OF SYSTEM IMAGES FOR OPERATING AND OBSERVING A TECHNICAL SYSTEM AND ENGINEERING SYSTEM
PROCÉDÉ MIS EN OEUVRE PAR ORDINATEUR POUR GÉNÉRER UNE HIÉRARCHIE D'IMAGES D'INSTALLATION POUR COMMANDER ET OBSERVER UNE INSTALLATION TECHNIQUE ET SYSTÈME D'INGÉNIERIE

(30) Priorität: 22.12.2022 EP 22216043
(43) Veröffentlichungstag der Anmeldung: 13.08.2025
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2023/080657
(87) Internationale Veröffentlichungsnummer: WO 2024/132280

(56) Entgegenhaltungen:
- US-A1- 2019 137 962
- US-A1- 2022 147 025

## Beschreibung

Die Erfindung betrifft ein computerimplementiertes Verfahren zur Erzeugung einer Anlagenbild-Hierarchie für ein Bedienen und Beobachten einer verfahrenstechnischen Anlage gemäß Patentanspruch 1 sowie ein Engineering-System gemäß Patentanspruch 8.

Für eine Bedienung und Beobachtung großer verfahrenstechnischer Anlagen werden Operatoren (d.h. Personen zur Bedienung und Beobachtung der Anlage) symbolische Anlagenbilder dargeboten, die die verfahrenstechnischen Zusammenhänge - insbesondere zwischen Objekten eines in der Anlage ablaufenden Prozesses (im Folgenden als "Prozessobjekte" bezeichnet) - abstrahiert darstellen.

Anlagenbilder setzen sich beispielsweise aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Block-Symbolen (zur dynamisierten Visualisierung verfahrenstechnischer Prozessobjekte), Symbole für Bediendialoge (z.B. sogenannte "Faceplates"), komplexen Controls (z.B. Trendanzeigen, Meldefolgeanzeigen, usw.) und Containern, um Inhalte aus unabhängigen und eigenständige Quellen visualisieren zu können (z.B. Anlagenbilder modularer Anlagenteile (Package Units), Apps (z.B. Regleroptimierer, KPI Berechnungen)) zusammen.

Aus der EP 3 623 891 A1 ist es bereits bekannt, zur Navigation zwischen Anlagenbildern in einem Operator-Station-Client für das Bedienen und Beobachten einer Anlage durch Operatoren so genannte "Anlagenbild-Hierarchien" zu nutzen - d.h. die für das Bedienen und Beobachten vorgesehenen Anlagenbilder werden dem Operator mittels einer hierarchisch (auf- und zusammenklappbaren) Baumstruktur angeboten. Über diese Baumstruktur können die Anlagenbilder zur Laufzeit der technischen Anlage ausgewählt und geöffnet werden.

Jeder Knoten der Bildhierarchie referenziert dabei ein Anlagenbild und einen so genannten Gruppenalarmstatus. Der Gruppenalarmstatus stellt den Alarmstatus des jeweiligen Anlagenbildes dar, **d.h.** alle Alarme der Prozessobjekte in einem Anlagenbild werden nach Alarmklassen getrennt aufsummiert und in der Bildhierarchie dargestellt. So kann ein Bediener eines Leitsystems der technischen Anlage beim Betrachten der Bildhierarchie unmittelbar erkennen, in welchem Anlagenbild alarmgebende Prozessobjekte vorhanden sind. Mittels eines so genannten Loop-Ins kann er unmittelbar zu diesen Prozessobjekten navigieren. Dies ist sogar dann möglich, wenn das Prozessobjekt bei einer kompakt dargestellten Bildhierarchie nicht erkennbar ist.

Die Bildhierarchie wird statisch in einer Engineering-Umgebung des Leitsystems der technischen Anlage projektiert und enthält oftmals zahlreiche, teilweise mehrere hundert Anlagenbilder. Daher wird die Bildhierarchie aus Übersichtlichkeitsgründen in der Regel zu einer Laufzeit der technischen Anlage nur in einem kompakten Modus dargestellt. Um effizienter zwischen den für jeden Bediener des Leitsystems individuell wichtigsten Bilder navigieren zu können, kann neben der statischen, im Engineering projektierten Bildhierarchie, auch eine dynamisch zur Laufzeit individualisierbare Bildhierarchie bereitgestellt werden. Der Operator kann diese mittels eines Individualisierungsservices zur Laufzeit der technischen Anlage selbst erstellen, optimieren und pflegen, um effizient zwischen seinen favorisierten Anlagenbildern navigieren zu können. Dadurch kann der Bediener beispielsweise schneller Alarmursachen identifizieren.

In der Anlagen-Bildhierarchie sind somit Anlagenbilder für ein Bedienen und Beobachten einer zu steuernden verfahrenstechnischen Anlage in Bezug auf Hierarchie und Reihenfolge strukturiert hinterlegt und zur Laufzeit der Anlage von einem Operator auswählbar und öffenbar. In der strukturierten Hinterlegung umfasst die Anlagenbild-Hierarchie zumindest eine erste (höhere) und eine zweite (niedrigere) Hierarchieebene, wobei Anlagenbilder der zweiten Hierarchieebene einem Anlagenbild der ersten Hierarchieebene zugeordnet sind und jeweils einem gleichen Anlagenbild der ersten Hierarchieebene zugeordnete Anlagenbilder der zweiten Hierarchieebene wiederum einer Reihenfolge zugeordnet sind, insbesondere einer Reihenfolge in Bezug auf eine verfahrenstechnische Struktur der Anlage. Eine derartige Anlagen-Bildhierarchie ist beispielweise aus der US 2019/137962 A1 bekannt.

Die Anlagenbild-Hierarchie wird üblicherweise im Engineering von einem Projekteur mit Hilfe eines speziellen Anlagenbild-Hierarchie-Editors erstellt, wobei die Anlagenbild-Hierarchie oftmals der Struktur der technologischen Hierarchie ähnelt. Hierbei sind oftmals mehrere hundert Anlagenbilder für die Bedienung und Beobachtung verfahrenstechnischer Anlagen zu berücksichtigen. Da alle vorhandenen Anlagenbilder im Anlagenbild-Hierarchie-Editor auf einer gleichen Ebene, **d.h. in** einer flachen Liste, angeboten werden, ist die Projektierung der Anlagenbild-Hierarchie aufwendig und potenziell fehleranfällig. Das ändert sich nach dem Stand der Technik auch dann nicht, wenn vermehrt modularisierte und vorkonfigurierte Anlagenteile (Package Units) zum Einsatz kommen, die üblicherweise ebenfalls mehrere Anlagenbilder bereitstellen. Derartige Anlagenteile werden bei neuen Anlagenkonzepten flexibel in die Anlage eingebunden oder auch wieder entfernt. Bei einer Einbindung einer neuen Package Unit mit neuen Anlagenbildern müssen dann stets alle neu hinzugekommenen Anlagenbilder einzeln in die Hierarchie eingefügt werden. Modularisierte und vorkonfigurierte Anlagenteile (Package Units) sind beispielsweise aus der US 2022/0147025 A1 bekannt.

Ausgehend hiervon ist es Aufgabe vorliegender Erfindung, eine effizientere und weniger fehleranfällige Erzeugung von Anlagenbild-Hierarchien zu ermöglichen.

Die Lösung dieser Aufgabe gelingt durch ein computerimplementiertes Verfahren gemäß Patentanspruch 1 und ein Engineering-System gemäß Patentanspruch **8.** Vorteilhafte Ausgestaltungen sind jeweils Gegenstand der Unteransprüche.

Ein Computerprogramm ist Gegenstand des Anspruchs **9.**

Ein computerlesbares Speichermedium ist Gegenstand des Anspruchs 10.

Das erfindungsgemäße Verfahren dient zur Erzeugung einer Anlagenbild-Hierarchie, in welcher Anlagenbilder für ein Bedienen und Beobachten einer zu steuernden verfahrenstechnischen Anlage in Bezug auf Hierarchie und Reihenfolge strukturiert hinterlegt sind und zur Laufzeit der Anlage von einem Operator auswählbar und öffenbar sind, wobei in der strukturierten Hinterlegung
- die Anlagenbild-Hierarchie zumindest eine erste (höhere) und eine zweite (niedrigere) Hierarchieebene umfasst,
- Anlagenbilder der zweiten Hierarchieebene einem Anlagenbild der ersten Hierarchieebene zugeordnet sind,
- jeweils einem gleichen Anlagenbild der ersten Hierarchieebene zugeordnete Anlagenbilder der zweiten Hierarchieebene einer Reihenfolge zugeordnet sind, insbesondere eine Reihenfolge in Bezug auf eine verfahrenstechnische Struktur der Anlage.

Erfindungsgemäß umfasst das Verfahren die folgenden Schritte,
a) Zuordnen zumindest einem Teil der Anlagenbilder der zweiten Hierarchieebene jeweils
   - eine Hierarchie-Information in Bezug auf ein Anlagenbild der ersten Hierarchieebene, und
   - eine Reihenfolge-Information in Bezug auf eine Reihenfolge in Bezug auf andere Anlagenbilder der zweiten Hierarchieebene, die dem gleichen Anlagenbild der ersten Hierarchieebene zugeordnet sind, insbesondere eine Reihenfolge in Bezug auf eine verfahrenstechnische Struktur der Anlage, wobei dieses Zuordnen vor der strukturierten Hinterlegung der Anlagenbilder erfolgt,
b) Ausgeben der Anlagenbilder für eine Auswahl **(z.B.** an einen Projekteur der Anlagenbild-Hierarchie),
c) Erfassen von Auswahlinformationen **(z.B.** von einem Projekteur der Anlagenbild-Hierarchie) in Bezug auf eine Auswahl der im Schritt b) ausgegebenen Anlagebilder für eine nachfolgende strukturierte Verschaltung miteinander in Bezug auf Hierarchie und Reihenfolge,
d) Ausgeben der im Schritt c) ausgewählten Anlagenbilder für deren nachfolgende strukturierte Verschaltung, wobei Anlagenbilder mit zugeordneter Hierarchie-Information und Reihenfolge-Information automatisch vorstrukturiert entsprechend der jeweils zugeordneten Hierarchie-Information und Reihenfolge-Information ausgegeben werden.

Aufgrund der Vorstrukturierung der Anlagenbilder mit Hilfe der Hierarchie- und der Reihenfolge-Informationen kann die nachfolgende strukturierte Verschaltung und somit die Projektierung der Anlagenbild-Hierarchie mit deutlich weniger Aufwand und Fehleranfälligkeit erfolgen. Im besten Fall ist die Vorstrukturierung bereits so vollständig und korrekt, dass überhaupt keine nachfolgende zusätzliche Verschaltung von Anlagenbildern mehr notwendig ist.

Diese Vorteile kommen insbesondere bei Verwendung von modularisierten und vorkonfigurierten verfahrenstechnische Anlagenteilen (häufig auch als "Package Units" bezeichnet) zum Tragen. Beispiele für derartige Anlagenteile sind die sogenannten "Module Type Packages" (MTPs), wie sie **z.B.** von der NAMUR (Interessengemeinschaft Automatisierungstechnik der Prozessindustrie **e.V.)** in dem Standard VDI/VDE/NAMUR 2658 definiert sind und beispielsweise in hybriden verfahrenstechnischen Anlagen eingesetzt werden. Sie können dabei flexibel in einen verfahrenstechnischen Prozess eingebunden oder auch wieder daraus entfernt werden. Derartige Anlagenteile stellen häufig mehrere Anlagenbilder bereit, die bei einer Eingliederung in einen Prozess in die Anlagenbild-Hierarchie eingebunden werden müssen. Zumindest ein Teil der Anlagenbilder mit den zugeordneten Hierarchie- und Reihenfolge-Informationen bezieht sich somit von Vorteil auf ein modularisiertes und vorkonfiguriertes verfahrenstechnisches Anlagenteil, insbesondere ein Module Type Package (MTP).

Gemäß einer vorteilhaften Ausgestaltung sind die Anlagenbilder durch eine technologische **(d.h.** verfahrenstechnische) Hierarchie der Anlage definiert bzw. werden durch diese bereitgestellt.

Gemäß einer weiteren besonders vorteilhaften Ausgestaltung werden die Anlagenbilder in dem Schritt b) entsprechend der technologischen Hierarchie der Anlage strukturiert ausgegeben. Hierdurch kann die Übersichtlichkeit bei der Auswahl der Anlagebilder und somit die Effizienz bei der Erzeugung der Anlagen-Bildhierarchie weiter erhöht werden.

Die Erzeugung der Anlagenbild-Hierarchie erfolgt von Vorteil in einem Engineering-System, wobei die Zuordnung der Hierarchie- und der Reihenfolge-Informationen vorzugsweise bei einem Import von Anlagebildern in das Engineering-System erfolgt.

Die Zuordnung der Hierarchie- und der Reihenfolge-Informationen kann manuell durch einen Projekteur oder automatisch auf Basis von Strukturinformationen erfolgen, die bereits mit den Anlagenbildern mitgeliefert werden, wie dies beispielsweise im Fall von modularisierten und vorkonfigurierten verfahrenstechnischen Anlagenteilen der Fall sein kann.

In einer sehr bedienerfreundlichen Ausgestaltung werden die Auswahlinformationen durch eine von einem Projekteur durchführbare Verschiebeoperation definiert, **z.B.** eine grafische Ziehbewegung oder eine Kopieren- und Einfügen Operation.

Zur weiteren Erhöhung der Effizienz bei der Erzeugung der Anlagenbild-Hierarchie können in dem Schritt b) nur Anlagenbilder zur Auswahl ausgegeben werden, die noch nicht in der Anlagenbild-Hierarchie enthalten sind.

Ein erfindungsgemäßes Engineering-System zur Erzeugung einer Anlagenbild-Hierarchie, in welcher Anlagenbilder für ein Bedienen und Beobachten einer zu steuernden verfahrenstechnischen Anlage in Bezug auf Hierarchie und Reihenfolge strukturiert hinterlegt sind und zur Laufzeit der Anlage von einem Operator auswählbar und öffenbar sind, wobei in der strukturierten Hinterlegung
- die Anlagenbild-Hierarchie zumindest eine erste und eine zweite Hierarchieebene umfasst,
- Anlagenbilder der zweiten Hierarchieebene einem Anlagenbild der ersten Hierarchieebene zugeordnet sind,
- jeweils einem gleichen Anlagenbild der ersten Hierarchieebene zugeordnete Anlagenbilder der zweiten Hierarchieebene einer Reihenfolge zugeordnet sind, insbesondere einer Reihenfolge in Bezug auf eine verfahrenstechnische Struktur der Anlage,
umfasst zumindest einen Prozessor, der mit einem Speicher verbunden ist, wobei der zumindest eine Prozessor so konfiguriert ist, dass er das vorstehend erläuterte Verfahren ausführt.

Die für das erfindungsgemäße Verfahren genannten Vorteile gelten entsprechend für das erfindungsgemäße Engineering-System.

Ein erfindungsgemäßes Computerprogramm umfasst Befehle, die bei der Ausführung des Programms durch ein erfindungsgemäßes Engineering-System dieses veranlassen, das vorstehend erläuterte Verfahren auszuführen.

Ein erfindungsgemäßes computerlesbares Speichermedium umfasst Befehle, die bei der Ausführung durch ein erfindungsgemäßes Engineering-System dieses veranlassen, das vorstehend erläuterte Verfahren auszuführen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine industrielle Anlage mit einem Automatisierungssystem mit einem erfindungsgemäßen Engineering-System,
- FIG 2: eine Erzeugung einer Anlagenbild-Hierarchie mit einem Anlagenbild-Hierarchie-Editor nach dem Stand der Technik,
- FIG 3: ein Objektmodell für eine erfindungsgemäße Erzeugung einer Anlagenbild-Hierarchie,
- FIG 4 - 7: eine erfindungsgemäße Erzeugung einer Anlagenbild-Hierarchie mit einem Anlagenbild-Hierarchie-Editor, und
- FIG 8: einen erfindungsgemäßen Verfahrensablauf.

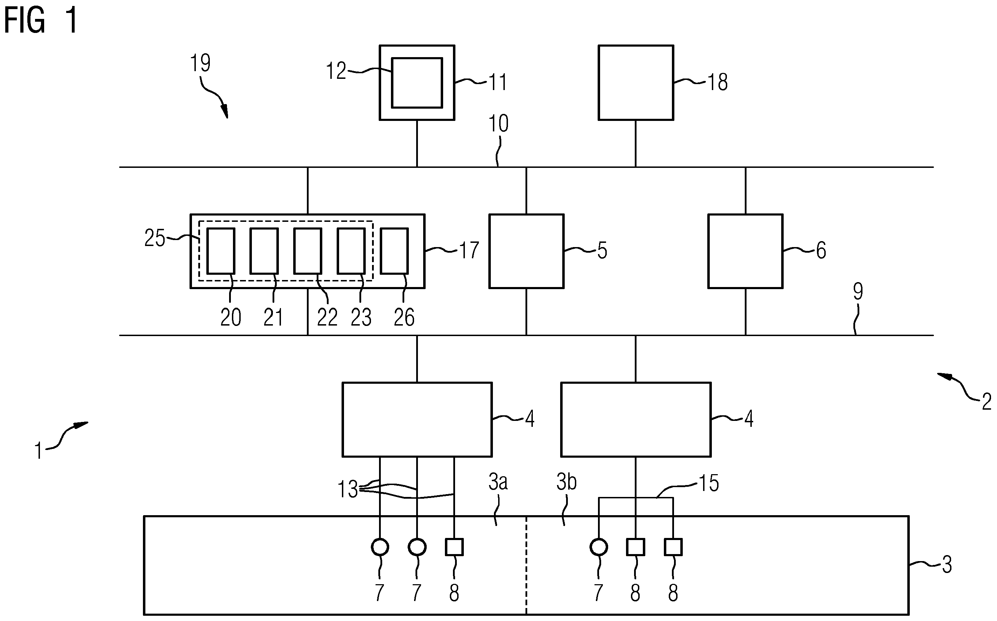

FIG 1 zeigt in vereinfachter Darstellung eine industrielle Anlage 1 mit einem industriellen Automatisierungssystem 2. Derartige Anlagen 1 kommen in verschiedensten Industriesektoren zum Einsatz, zum Beispiel in der Prozess-Industrie (z.B. Chemie, Pharmazie, Metall, Öl- und Gas, Papier), der diskreten Fertigungsindustrie und in der Energieerzeugung. Der eigentliche branchenspezifische Prozess 3, z.B. ein Produktions- oder Energieerzeugungsprozess, wird durch das Automatisierungssystem 2 gesteuert und/oder geregelt und überwacht. Das Automatisierungssystem 2 umfasst hierzu eine oder mehrere industrielle Steuerungen (hier die Steuerungen 4) und zwei oder mehr Automatisierungs-Server 5, 6, die häufig auch als "Anwendungs-Server" (Application-Server) oder "Operator-Station-Server" bezeichnet werden.

Jede der Steuerungen 4 steuert dann den Betrieb jeweils eines Teilprozesses 3a bzw. 3b des Prozesses 3 in Abhängigkeit von dessen Betriebszuständen, wobei die Teilprozesse 3a, 3b in einer verfahrenstechnischen Prozessflussrichtung hintereinandergeschaltet sind, **d.h.** der Teilprozess 3b ist dem Teilprozess 3a nachgeschaltet. Der Prozess 3 umfasst hierzu von den Steuerungen 4 ansteuerbare Aktoren **7.** Hierbei kann es sich um einzelne Aktoren **(z.B.** einen Motor, eine Pumpe, ein Ventil, ein Schalter), oder um Gruppen derartiger Aktoren oder um ganze Sektionen einer Anlage handeln. Weiterhin umfasst der Prozess Sensoren **8,** die den Steuerungen 4 Istwerte von Prozessvariablen **(z.B.** Temperaturen, Drücke, Geschwindigkeiten) zur Verfügung stellen. Dem Teilprozess 3a ist dabei der Automatisierungs-Server 5 und dem Teilprozess 3b ist der Automatisierungs-Server 6 zugeordnet. Das Automatisierungssystem 2 ohne die Feldgeräte **(d.h.** ohne Aktoren 7 und Sensoren 8) wird häufig auch als "Prozessleitsystem" bezeichnet.

Ein Kommunikationsnetzwerk der Anlage 1 umfasst auf übergeordneter Ebene ein Anlagen-Netzwerk 10 **(z.B.** ein Industrial Ethernet-Netzwerk), über das die Automatisierungs-Server **5, 6** mit einer Bedien- und Beobachtungs-Station 18, häufig auch als "Operator Station Client" bezeichnet, in Kommunikation stehen, und ein Steuerungs-Netzwerk 9 **(z.B.** ein Industrial Ethernet-Netzwerk), über das die Steuerungen 4 miteinander und mit den Automatisierungs-Servern **5,** 6 in Kommunikationsverbindung stehen. Die Verbindung der Steuerungen 4 mit den Aktoren 7 und Sensoren 8 kann über diskrete Signalleitungen 13 oder über einen Feldbus 15 erfolgen.

In den Automatisierungs-Servern **5,** 6 sind ein oder mehrere anlagenspezifische Anwendungsprogramme gespeichert, die beim Betrieb der Anlage 1 zur Ausführung gebracht werden. Diese dienen beispielsweise dazu, in der Anlage 1 die Steuerungen 4 zu konfigurieren, Bediener-Aktivitäten an der Bedien- und Beobachtungs-Station 18 zu erfassen und auszuführen **(z.B.** Sollwerte von Prozessvariablen einzustellen oder zu ändern) oder Meldungen für Anlagenpersonal zu erzeugen und auf der Bedien- und Beobachtungs-Station 18 zur Anzeige zu bringen.

Das Automatisierungs-System 2 umfasst außerdem noch einen Engineering-Server 17 und einen Engineering-Client 11, die ebenfalls an das Anlagen-Netzwerk 10 angeschlossen sind. Der Engineering-Server 17 und der Engineering-Client 11 bilden ein Engineering-System 19 zur Erstellung bzw. Projektierung der anlagenspezifischen Anwendungsprogramme in den Automatisierungs-Servern 5, 6.

Es können noch weitere nicht dargestellte Operator-Station-Clients und/oder Engineering-Clients sowie weitere Engineering-Server, Archiv-Server, Batch-Systeme etc. vorhanden und an das Anlagen-Netzwerk 10 angeschlossen sein.

Die Server 5, 6, 17 umfassen jeweils einen Web-Server, der Web-Applikation bereitstellt. Auf der Bedien- und Beobachtungs-Station 18 und der Engineering-Station 11 ist wiederum jeweils ein darauf ablaufender Web-Browser installiert, der über das Netzwerk 10 mit den Web-Servern der Server 5, 6, 17 kommunikativ verbindbar bzw. verbunden ist.

Das Engineering-System 19 dient zu Erzeugung bzw. Konfiguration der anlagenspezifischen Anwendungsprogramme in den Automatisierungs-Servern 5, 6. Dies umfasst eine Erstellung einer technologischen (d.h. verfahrenstechnischen) Hierarchie 20 der Anlage mittels einer geeigneten Software des Engineering-Systems 19. Diese technologische Hierarchie 20 wird oft auch als "Equipment Hierarchie" bezeichnet und wird in einem Speicher 25 des Engineering-Servers 17 abgespeichert. In dieser technologischen Hierarchie 20 sind Prozessobjekte, wie z.B. Messstellen, Tanks, Ventile, Sensoren, Aktoren, Continuous Function Charts (CFCs), Sequential Function Charts (SFCs), strukturiert gemäß einer Baumstruktur eingetragen bzw. hinterlegt. Die technologische Hierarchie 20 wird nach Erstellung von dem Engineering-System 19 kompiliert und dann in die Automatisierungs-Server 5, 6 und somit in die Laufzeitumgebung des Automatisierungssystems 2 geladen. Die technologische Hierarchie 20 ist dann in den Automatisierungs-Server 5, 6 wiederum die Grundlage für ein Prozessabbild, welches die Datenstrukturen der dem jeweiligen Automatisierungs-Server zugeordneten Prozessobjekte aufweist.

Für das Bedienen und Beobachten der Anlage 1 werden einem Operator während der Laufzeit der Anlage 1 von den Anwendungsservern 5,6 auf einer grafischen Benutzeroberfläche des Operator-Station-Clients 18 verschiedene Anlagenbilder dargeboten. Zur Navigation zwischen den Anlagenbildern werden so genannte Anlagenbild-Hierarchien genutzt - **d.h.** die für das Bedienen und Beobachten vorgesehenen Anlagenbilder werden mittels einer hierarchisch (auf- und zusammenklappbaren) Baumstruktur angeboten. Über diese Baumstruktur können die Anlagenbilder zur Laufzeit der technischen Anlage von einem Operator ausgewählt und geöffnet werden.

Jeder Knoten der Bildhierarchie referenziert dabei ein Anlagenbild und vorzugsweise auch einen so genannten Gruppenalarmstatus. Der Gruppenalarmstatus stellt den Alarmstatus des jeweiligen Anlagenbildes dar, **d.h.** alle Alarme der Prozessobjekte in einem Anlagenbild werden nach Alarmklassen getrennt aufsummiert und in der Bildhierarchie dargestellt. So kann ein Operator des Automatisierungssystems 2 der Anlage 1 beim Betrachten der Bildhierarchie unmittelbar erkennen, in welchem Anlagenbild alarmgebende Prozessobjekte vorhanden sind. Mittels eines sogenannten Loop-Ins kann er unmittelbar zu diesen Prozessobjekten navigieren. Dies ist sogar dann möglich, wenn das Prozessobjekt bei einer kompakt dargestellten Bildhierarchie nicht erkennbar ist.

Das Engineering-System 19 dient auch zur (statischen) Erzeugung bzw. Projektierung der Anlagenbild-Hierarchie 21 und der Abspeicherung zugehöriger Hierarchie-Informationen in dem Speicher 25. Es umfasst hierzu einen speziellen Anlagenbild-Hierarchie-Editor 22, der als ein Programm ebenfalls in dem Speicher 25 des Engineering-Servers 17 gespeichert ist. Der Engineering-Server 17 umfasst weiterhin zumindest einen Prozessor 26, der mit dem Speicher 25 verbunden und so konfiguriert ist, dass er das nachfolgend beschriebene Verfahren zur Erzeugung der Anlagenbild-Hierarchie 21 ausführt.

Da oftmals mehrere hundert Anlagenbilder für die Bedienung und Beobachtung der Anlage 1 notwendig sind, ist die Erzeugung der Anlagenbild-Hierarchie 21 im Stand der Technik aufwendig und fehleranfällig.

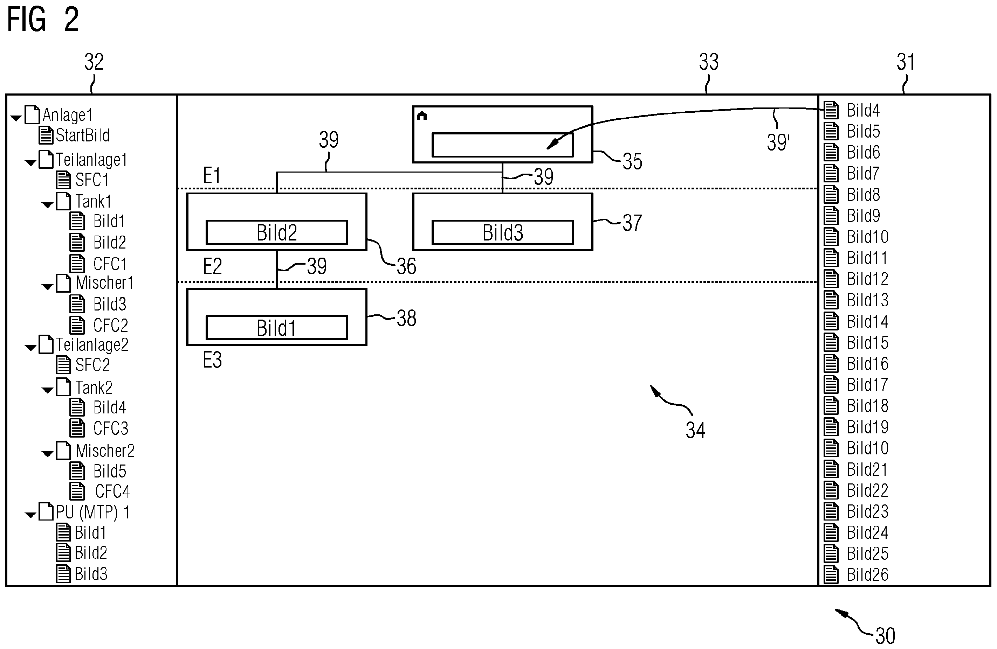

FIG 2 zeigt hierzu beispielhaft eine grafische Ausgabe 30 eines Anlagenbild-Hierarchie-Editors 22 auf einem Display 12 des Engineerings-Clients 11 nach dem Stand der Technik. Die grafische Ausgabe umfasst drei Bereiche 31, 32, 33.

In einem linken Bereich 32 ist die technologische Hierarchie 20 der Anlage 1 mit den verschiedene Prozessobjekten dargestellt. In dem Ausführungsbeispiel umfasst die technologische Hierarchie auf einer ersten obersten Ebene die Anlage 1 als "Anlage1" mit einem zugeordneten Anlagenbild "StartBild". Auf einer darunter liegenden zweiten Hierarchieebene ist die Anlage 1 untergliedert in eine "Teilanlage 1", eine "Teilanlage 2" und eine Package Unit "PU(MTP)1". Diesen sind auf einer dritten, wiederum darunter liegenden Hierarchieebene dann Anlagenkomponenten wie **z.B.** ein erster Tank "Tank1", ein erster Mischer "Mischer1", ein zweiter Tank "Tank2" und ein zweiter Mischer "Mischer2" mit jeweils wiederum hierarchisch darunter liegenden Prozessobjekten wie **z.B.** Anlagenbilder (Bild1, Bild2, Bild3, etc.) und Continuous Flow Charts CFC1, CFC2, CFC3, etc. zugeordnet.

Im Stand der Technik werden in dem Bereich 31 einem Projekteur alle in der technologischen Hierarchie 20 vorhandenen Anlagenbilder, hier ausschnittsweise Bild4 - Bild26, auf einer gleichen Ebene in einer flachen Liste zur Auswahl angeboten.

Der Bereich 33 des Anlagenbild-Hierarchie-Editors 22 dient einem Projekteur zur Erzeugung einer Anlagenbild-Hierarchie 34.

Der Projekteur muss hierzu nun die einzelnen Anlagenbilder in dem Bereich 31 durch ein Anklicken auswählen, durch eine grafische drag&drop-Verschiebeoperation (symbolisiert durch den Pfeil 39') in den Bereich 33 verschieben, dort anordnen und mit anderen Anlagebilder strukturiert zu der Anlagenbild-Hierarchie 34 verschalten (symbolisiert durch die Verbindungen 39). Die Verbindungen 39 werden hierbei von Vorteil besonders einfach dadurch automatisch erzeugt, dass ein ausgewähltes Anlagenbild per drag&drop auf ein Anlagenbild im Bereich 33 platziert wird. Hierduch wird dieses ausgewählte Anlagenbild demjenigen Anlagenbild, auf dem es platziert wird, untergeordnet.

Vorliegend umfasst die Anlagenbild-Hierarchie 34 unter dem Startbild 35 eine erste Hierarchieebene E1, eine darunter liegende zweite Hierarchieebene E2 und eine wiederum darunter liegende dritte Hierarchieebene E3.

Die Anlagenbilder 36, 37, 38 sind jeweils einem Anlagenbild einer darüber liegenden Hierarchieebene zugeordnet, hier die Anlagenbilder 36, 37 der zweiten Hierarchieebene E2 dem Anlagenbild 35 der ersten Hierarchieebene E1 und das Anlagenbild 38 der dritten Hierarchieebene E3 dem Anlagenbild 36 der zweiten Hierarchieebene E2.

Die auf der gleichen Ebene liegenden Anlagenbilder 36, 37 sind dabei einer Reihenfolge der technologischen Verfahrensstruktur zugeordnet. Beispielsweise bezieht sich das Anlagenbild 36 auf den Teilprozess 3a und Anlagenbild 37 auf den nachfolgenden Teilprozess 3b gemäß FIG **1****.** Die Anlagenbilder 36, 37 sind deshalb von links nach rechts in der Reihenfolge des verfahrenstechnischen Prozesses 3 angeordnet.

Allerdings ist die Auswahl der Anlagenbilder in dem Bereich 31 und deren Anordnung sowie Verschaltung in dem Bereich 33 zeitlich aufwendig und potenziell fehleranfällig.

Um diesen Aufwand und die Fehleranfälligkeit zu reduzieren, erfolgt erfindungsgemäß zeitlich vor diesem Strukturierungsvorgang bereits eine Vorstrukturierung der Anlagenbilder.

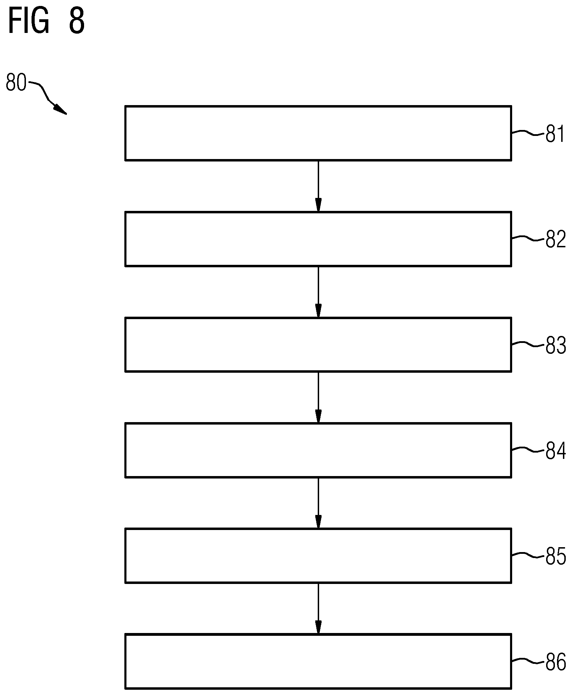

Das erfindungsgemäße Verfahren zur Vorstrukturierung soll anhand eines in FIG 8 gezeigten Verfahrensablaufes 80 veranschaulicht werden:
In einem ersten Schritt 81 werden von dem Engineering-System 19 für zumindest einen Teil der Anlagenbilder der zweiten und weiter darunter liegenden Hierarchieebenen E2, E3 zeitlich vor der eigentlichen strukturierten Hinterlegung **(d.h.** Strukturierung durch Verschaltung) durch einen Projekteur bereits jeweils eine Hierarchie-Information in Bezug auf ein Anlagenbild einer jeweils darüber liegenden Hierarchieebene sowie eine Reihenfolge-Information in Bezug auf eine Reihenfolge in Bezug auf andere Anlagenbilder, die der jeweils gleichen Hierarchieebene zugeordnet sind, erfasst und in dem Speicher 25 abgespeichert. Die Reihenfolge bezieht sich dabei auf die verfahrenstechnische Struktur der Anlage **1.**

Die Erfassung dieser Informationen kann dabei automatisch bei einem Import von Anlagenbildern in das Engineering-Systems 19, **z.B.** durch Aufforderung eines Projekteurs zur Dateneingabe auf dem Engineering-Client 11, oder zu einem späteren Zeitpunkt manuell ausgelöst durch den Projekteur erfolgen. Im Fall von modularen vorstrukturierten Anlagenteilen, die Anlagenbilder bereitstellen, werden hierbei bevorzugt bereits von diesen Anlagenteilen bereitgestellte (mitgelieferte) Strukturinformationen zu Hierarchien und Reihenfolgen der Anlagenbilder automatisch berücksichtigt.

In einem zweiten Schritt 82 werden diese Hierarchie- und Reihenfolgeinformationen in dem Speicher 25 des Engineering-Servers 17 abgespeichert.

In einem dritten Schritt 83 werden die Anlagenbilder einem Projekteur in dem Bereich 31 des Editors 21 für eine Auswahl ausgegeben. Vorzugsweise werden die Anlagenbilder dabei strukturiert wie in der im Bereich 32 gezeigten technologischen Hierarchie der Anlage 1 ausgegeben.

In einem vierten Schritt 84 werden Auswahlinformationen von dem Projekteur in Bezug auf eine Auswahl, der in dem dritten Schritt 83 in dem Bereich 31 ausgegebenen Anlagebilder erfasst. Diese Auswahl dient für deren nachfolgende strukturierte Verschaltung miteinander in Bezug auf Hierarchie und Reihenfolge.

In einem fünften Schritt 85 werden die im vierten Schritt 84 ausgewählten Anlagenbilder für deren nachfolgende strukturierte Verschaltung dem Projekteur in dem Bereich 33 des Editors 21 ausgegeben. Dabei werden diejenigen ausgewählten Anlagenbilder, denen eine Hierarchie-Information und eine Reihenfolge-Information zugeordnet ist, automatisch entsprechend dieser jeweils zugeordneten Informationen vorstrukturiert in Bezug auf Hierarchie und Reihenfolge in dem Bereich 33 ausgegeben.

Diese Vorstrukturierung kann dann bei Bedarf in einem sechsten Schritt 86 korrigiert oder ergänzt werden und somit die Anlagenbild-Hierarchie 21 fertiggestellt werden.

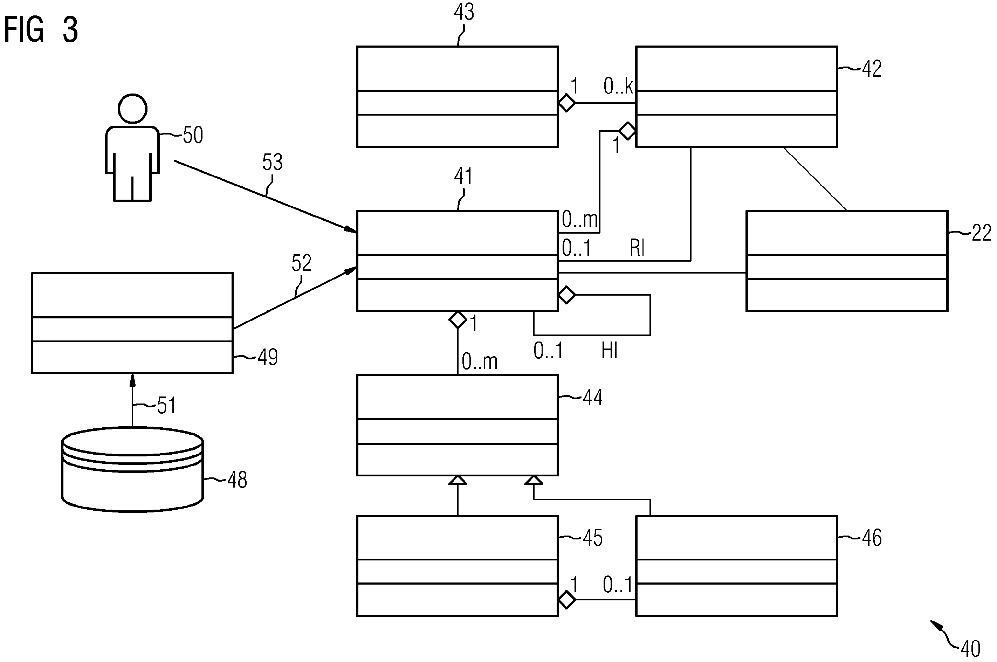

FIG 3 zeigt hierzu ein mögliches zugehöriges Objektmodell 40 in dem Engineering-Server 17.

Zentraler Bestandteil sind dabei die verschiedenen Anlagenbilder 41, denen jeweils grafische Objekte 44 zugeordnet sind, die beispielsweise Blocksymbole 45 und Faceplates 46 umfassen. Die Anlagenbild-Hierarchie ist durch einen Strukturordner 42 definiert, der wiederum einem spezifischen Anlagenprojekt 43 zugeordnet ist. Die Anlagenbild-Hierarchie wird mit Hilfe des (erfindungsgemäß erweiterten) Anlagenbild-Hierarchie-Editors 22 definiert. Erfindungsgemäß sind den Anlagenbildern 41 jeweils eine Hierarchieinformation HI und eine Reihenfolgeinformation RI wie vorstehend erläutert zuordenbar. Die Projektierung der vorstrukturierten Anlagenbilder 41 kann nach wie vor durch einen Projekteur 50 erfolgen (symbolisiert durch einen Pfeil 53). Sie kann aber auch beim Import einer Beschreibung 48 eines modularisierten vorkonfigurierten verfahrenstechnischen Anlagenteils (Package Unit) erfolgen, die auch eine Beschreibung der zu generierenden Anlagenbilder und deren Bezug zueinander beinhaltet. Es kann hierfür ein spezieller Package Unit Import/Export-Editor 49 zum Einsatz kommen, der die Beschreibung 48 der Package Unit liest (symbolisiert durch einen Pfeil 51) und daraus die Anlagenbilder mit den Hierarchieinformationen HI und Reihenfolgeinformationen RI erzeugt (symbolisiert durch einen Pfeil 52).

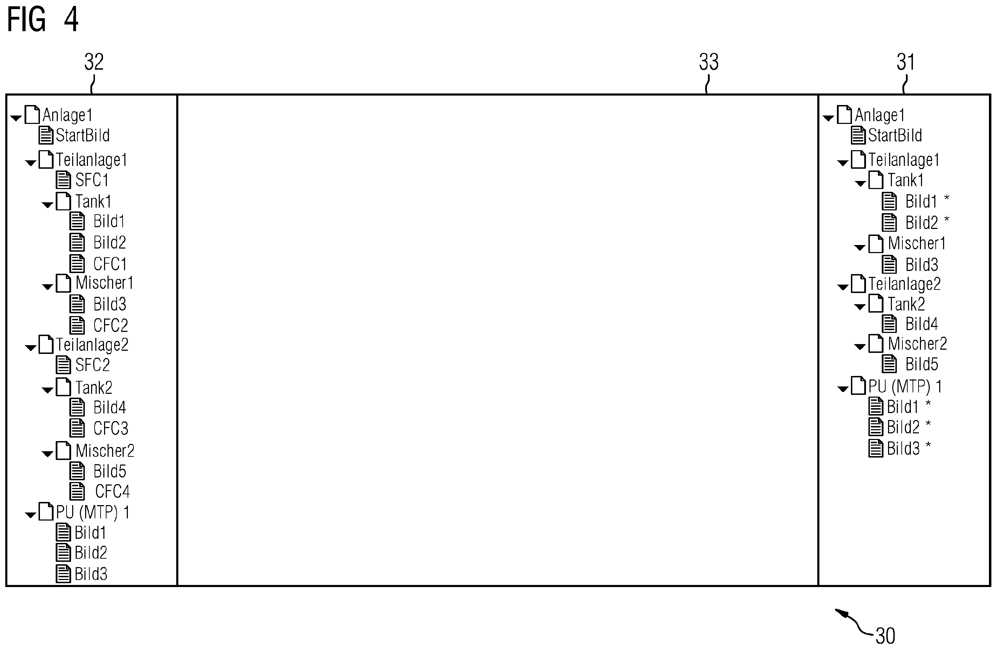

FIG 4 - 7 zeigen nun ein Ausführungsbeispiel für ein erfindungsgemäß Arbeiten mit dem (erweiterten) Anlagenbild-Hierarchie-Editor 22.

FIG 4 zeigt im linken Bereich 32 die technologische Hierarchie der Anlage 1 wie im Bereich 32 von FIG **1****.** Im Bereich 31 werden nun entsprechend der technologischen Strukturierung diejenigen Anlagebilder der Anlage ausgegeben, die noch nicht der Anlagenbild-Hierarchie im Bereich 33 zugeordnet sind. Den mit einem Stern "*" gekennzeichneten Bildern sind dabei jeweils Hierarchie- und Reihenfolgeinformationen zugeordnet (hier Bild1, Bild2 von Tank1 und Bild1, Bild2, Bild3 von PU(MTP)1), **d.h.** diese Anlagenbilder sind bereits vorstrukturiert.

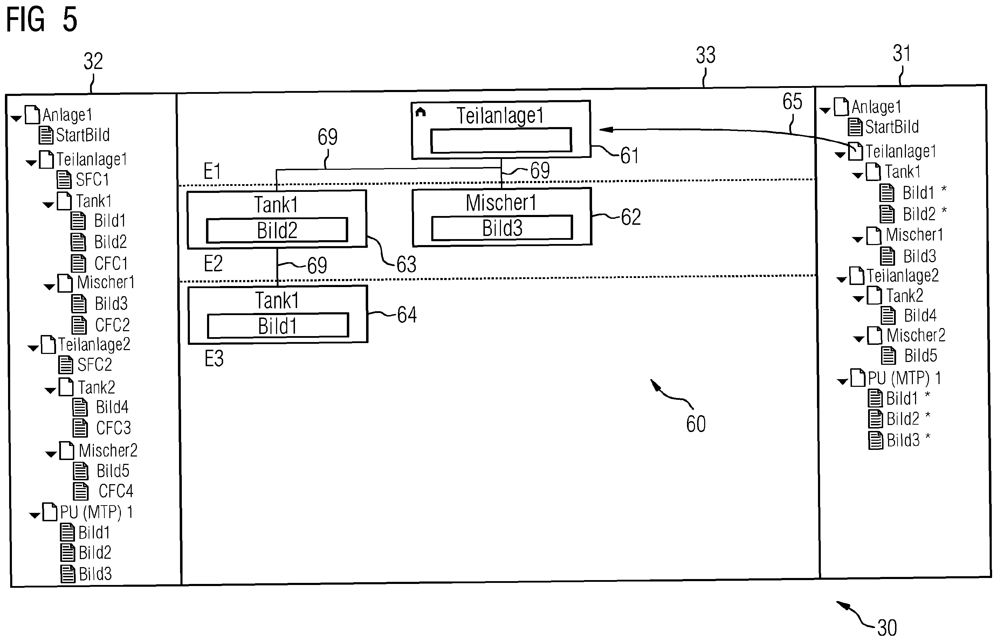

Gemäß FIG 5 können nun die Anlagenbilder des Bereichs 31 durch Anklicken ausgewählt und dann in Form eines "Drag&Drop" (symbolisiert durch einen Pfeil 65) in dem Bereich 33 platziert und zu einer Anlagebild-Hierarchie 60 verschaltet werden. Mit E1, E2 und E3 sind dabei die unterschiedlichen Hierarchieebenen der Anlagebild-Hierarchie 60 bezeichnet.

Im Fall von FIG 5 wurden beispielsweise von der Anlagenkomponente "Tank1" die Anlagenbilder 63 "Bild2" und 64 "Bild1" und von der Anlagenkomponente "Mischer1" das Anlagenbild 62 "Bild3" durch Anklicken des jeweils übergeordneten Strukturknotens ausgewählt und per "Drag&Drop" in dem Bereich 33 platziert.

Befinden sich darunter vorstrukturierte Anlagenbilder, so wird diese Strukturierung durch den Anlagenbild-Hierarchie-Editor 22 automatisch berücksichtigt - wie hier bei den Anlagenbildern 63 "Bild2" und 64 "Bild1" der Komponente "Tank1". Obwohl diese beiden Anlagenbilder 63, 64 in der technologischen Hierarchie in derselben Ebene liegen, kann durch die Vorstrukturierung festgelegt werden, dass beispielsweise das Anlagenbild 64 "Bild1" untergeordnet zum Anlagenbild 63 "Bild2" ist.

Die Unterordnung der vorstrukturierten Anlagenbilder 63, 64 sowie des Anlagenbildes 62 "Bild3" der Komponente "Mischer1" in der Hierarchie unter das Anlagenbild 61 kann dadurch erfolgen, dass im Bereich 31 der jeweils übergeordnete Strukturknoten ausgewählt und dann per drag&drop direkt auf dem Anlagenbild 61 platziert wird. Hierdurch wird automatisch die durch die Verbindungslinien 69 symbolisierte Verschaltung bewirkt. Alternativ kann dies in dem Editor 22 durch einen Projekteur durch eine manuell hergestellte Verbindung erfolgen.

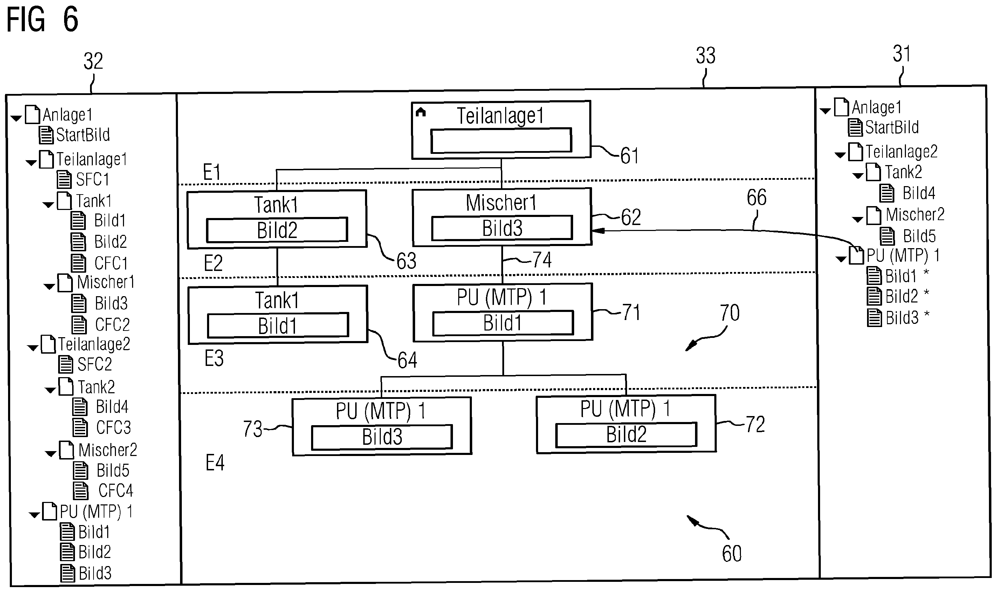

Wie FIG 6 zeigt, werden im Weiteren nur bisher nicht in der Hierarchie 60 verwendete Anlagenbilder weiterhin in dem Bereich 31 zur Auswahl ausgegeben. Die weitere Erzeugung bzw. Projektierung der Anlagenbild-Hierarchie 60 kann somit sehr effizient erfolgen.

Bei der Package Unit PU(MTP)1 wird nun davon ausgegangen, dass diese nach dem Import in das Engineering-System 19 ebenfalls mit Hilfe von Hierarchie- und Reihenfolgeinformationen vorstrukturiert vorliegt, hier Anlagenbilder Bild3 und Bild2 jeweils untergeordnet zu Bild1, wobei Bild3 in der verfahrenstechnischen Reihenfolge vor Bild2 liegt.

Wenn nun diese Anlagenbilder der Package Unit PU(MTP)1 durch Anklicken und "Drag&Drop" des übergeordneten Strukturknotens PU(MTP)1 ausgewählt und in dem Bereich 33 platziert werden, dann werden sie in dem Bereich 33 entsprechend dieser Vorstrukturierung ausgegeben (siehe Anlagenbilder 71, 72, 73 in FIG 6). Der Projekteur muss diese nun nur noch mit der bereits bestehenden Anlagenbild-Hierarchie 60 verschalten, hier beispielsweise dem Anlagenbild 62 unterordnen, symbolisiert durch die Verbindungslinie 74. Besonders vorteilhaft erfolgt diese Verschaltung bereits automatisch dadurch, dass der übergeordnete Strukturknoten PU(MTP)1 ausgewählt und per drag&drop direkt in dem Anlagenbild 62 platziert wird.

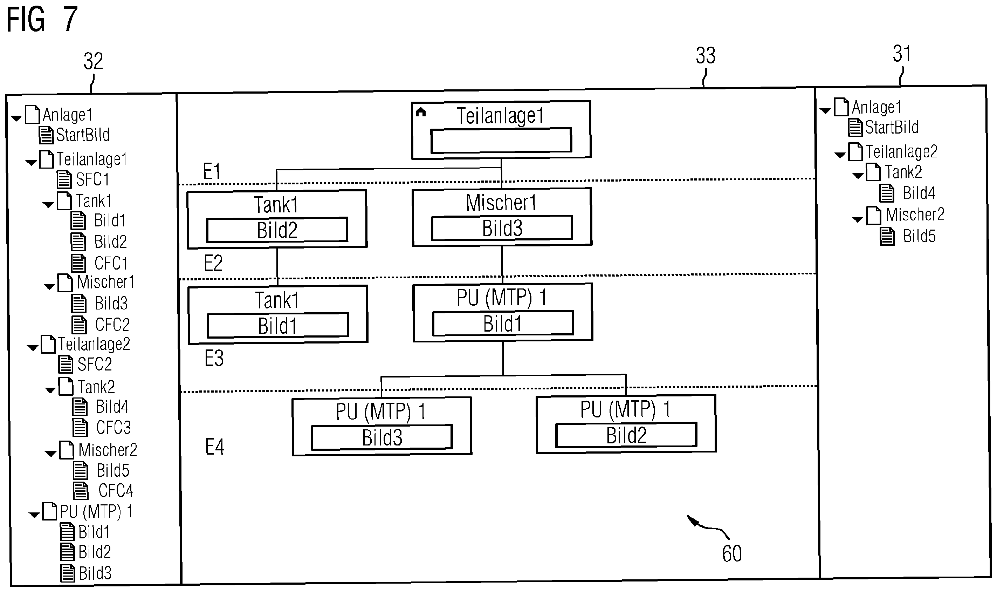

Wie in FIG 7 gezeigt ist, hat sich die technologisch strukturierte Liste der Anlagenbilder im Bereich 31 damit weiter reduziert.

Grundsätzlich ist es auch möglich, alle Anlagenbilder durch entsprechende Zuordnung von Hierarchie- und Reihenfolgeinformationen vorzustrukturieren. Es genügt dann, in dem Bereich 31 nur den obersten Strukturknoten (hier "Anlage1") durch Anklicken auszuwählen und per drag&drop in dem Bereich 33 zu platzieren. In dem Bereich 33 wird dann automatische die durch die Hierarchie- und Reihenfolgeinformationen definierte Anlagenbild-Hierarchie 60 ausgegeben. Hierdurch kann eine maximale Effizienz bei der Erzeugung der Anlagenbild-Hierarchie 60 erreicht werden.

Natürlich kann, auch wenn Anlagenbilder vorstrukturiert worden sind, in dem Bereich 33 jederzeit eine Anpassung der Anlagenbild-Hierarchie 60 im Detail erfolgen. Die Vorstrukturierung der Anlagenbilder, wie auch die technologische bzw. Strukturierung im Bereich 31 dient im Wesentlichen einer effizienten "Initialisierung".

Das Engineering-System 19 wurde in dem Ausführungsbeispiel in Form einer Client-Server-Architektur beschrieben. Dies soll aber nicht einschränkend verstanden werden. Es sind auch andere Architekturen möglich. Beispielsweise kann das Engineering-System 19 auch durch einen einzigen Rechner realisiert werden.

Zusammengefasst ist mit Hilfe der erfindungsgemäß vorstrukturierten Anlagenbilder eine effizientere und weniger fehleranfällige Erzeugung bzw. Projektierung von Anlagenbild-Hierarchien möglich, um insbesondere die Einbindung bzw. einen Austausch von modularisierten Anlagenteilen über modularisierte vorkonfigurierte verfahrenstechnische Anlagenteile (Package Units), insbesondere MTPs, in hybriden verfahrenstechnischen Anlagen zu verbessern.

## Patentansprüche

1. Computerimplementiertes Verfahren zur Erzeugung einer Anlagenbild-Hierarchie (60), in welcher Anlagenbilder (61, 62, 63) für ein Bedienen und Beobachten einer zu steuernden verfahrenstechnischen Anlage (1) in Bezug auf Hierarchie und Reihenfolge strukturiert hinterlegt sind und zur Laufzeit der Anlage (1) von einem Operator auswählbar und öffenbar sind, wobei in der strukturierten Hinterlegung
- die Anlagenbild-Hierarchie (60) zumindest eine erste und eine zweite Hierarchieebene (E1, E2) umfasst,
- Anlagenbilder der zweiten Hierarchieebene (E2) einem Anlagenbild der ersten Hierarchieebene (E1) zugeordnet sind,
- jeweils einem gleichen Anlagenbild der ersten Hierarchieebene (E1) zugeordnete Anlagenbilder der zweiten Hierarchieebene (E2) einer Reihenfolge zugeordnet sind, insbesondere einer Reihenfolge in Bezug auf eine verfahrenstechnische Struktur der Anlage (1),
**gekennzeichnet durch** die folgenden Schritte:
a) Zuordnen zumindest einem Teil der Anlagenbilder (62, 63) der zweiten Hierarchieebene (E2) jeweils:
- eine Hierarchie-Information (HI) in Bezug auf ein Anlagenbild der ersten Hierarchieebene (E1), und
- eine Reihenfolge-Information (RI) in Bezug auf eine Reihenfolge in Bezug auf andere Anlagenbilder der zweiten Hierarchieebene (E2), die dem gleichen Anlagenbild der ersten Hierarchieebene (E1) zugeordnet sind, insbesondere eine Reihenfolge in Bezug auf eine verfahrenstechnische Struktur der Anlage (1), wobei dieses Zuordnen vor der strukturierten Hinterlegung der Anlagenbilder erfolgt,
b) Ausgeben der Anlagenbilder für eine Auswahl,
c) Erfassen von Auswahlinformationen in Bezug auf eine Auswahl der im Schritt b) ausgegebenen Anlagebilder für deren nachfolgende strukturierte Verschaltung miteinander in Bezug auf Hierarchie und Reihenfolge,
d) Ausgeben der im Schritt c) ausgewählten Anlagenbilder für deren nachfolgende strukturierte Verschaltung, wobei Anlagenbilder mit zugeordneter Hierarchie-Information (HI) und Reihenfolge-Information (RI) automatisch vorstrukturiert entsprechend der jeweils zugeordneten Hierarchie-Information (HI) und Reihenfolge-Information (RI) ausgegeben werden.

2. Verfahren nach Anspruch 1, wobei sich zumindest ein Teil der Anlagenbilder mit den zugeordneten Hierarchie- und Reihenfolge-Informationen (HI, RI) auf ein modularisiertes und vorkonfiguriertes verfahrenstechnisches Anlagenteil (PU(MTP)1), insbesondere ein Module Type Package, beziehen.

3. Verfahren nach einem der vorhergehenden Ansprüche, wobei die Anlagenbilder durch eine technologische Hierarchie (20) der Anlage (1) definiert sind.

4. Verfahren nach Anspruch 3, wobei die Anlagenbilder in dem Schritt b) entsprechend der technologischen Hierarchie (20) der Anlage strukturiert ausgegeben werden.

5. Verfahren nach einem der vorhergehenden Ansprüche, wobei die Erzeugung der Anlagenbild-Hierarchie (60) in einem Engineering-System (19) erfolgt und wobei die Zuordnung der Hierarchie- und der Reihenfolge-Informationen (HI, RI) bei einem Import von Anlagebildern in das Engineering-System (19) erfolgt.

6. Verfahren nach einem der vorhergehenden Ansprüche, wobei die Auswahlinformationen durch eine von einem Projekteur durchführbare Verschiebeoperation definiert werden.

7. Verfahren nach einem der vorhergehenden Ansprüche, wobei in dem Schritt b) nur Anlagenbilder zur Auswahl ausgegeben werden, die noch nicht in der Anlagenbild-Hierarchie (60) enthalten sind.

8. Engineering-System (19) zur Erzeugung einer Anlagenbild-Hierarchie (60), in welcher Anlagenbilder (61, 62, 63) für ein Bedienen und Beobachten einer zu steuernden verfahrenstechnischen Anlage (1) in Bezug auf Hierarchie und Reihenfolge strukturiert hinterlegt sind und zur
Laufzeit der Anlage (1) von einem Operator auswählbar und öffenbar sind, wobei in der strukturierten Hinterlegung
- die Anlagenbild-Hierarchie (60) zumindest eine erste und eine zweite Hierarchieebene (E1, E2) umfasst,
- Anlagenbilder der zweiten Hierarchieebene (E2) einem Anlagenbild der ersten Hierarchieebene (E1) zugeordnet sind,
- jeweils einem gleichen Anlagenbild der ersten Hierarchieebene (E1) zugeordnete Anlagenbilder der zweiten Hierarchieebene (E2) einer Reihenfolge zugeordnet sind, insbesondere einer Reihenfolge in Bezug auf eine verfahrenstechnische Struktur der Anlage (1),
umfassend zumindest einen Prozessor (26), der mit einem Speicher (25) verbunden ist,
**dadurch gekennzeichnet, dass** der zumindest eine Prozessor (26) so konfiguriert ist, dass er das Verfahren nach einem der vorhergehenden Ansprüche ausführt.

9. Computerprogramm, umfassend Befehle, die bei der Ausführung des Programms durch ein Engineering-System (19) gemäß Anspruch 8 dieses veranlassen, das Verfahren nach einem der Ansprüche 1 bis 7 auszuführen.

10. Computerlesbares Speichermedium, umfassend Befehle, die bei der Ausführung durch ein Engineering-System (19) gemäß Anspruch 8 dieses veranlassen, das Verfahren nach einem der Ansprüche 1 bis 7 auszuführen.

## Claims

1. Computer-implemented method for generating a plant image hierarchy (60), in which plant images (61, 62, 63) for operating and observing a process engineering plant (1) to be controlled are stored in a structured manner with regard to hierarchy and sequence and can be selected and opened by an operator during the runtime of the plant (1), wherein in the structured storage:
- the plant image hierarchy (60) comprises at least a first and a second hierarchy level (E1, E2),
- plant images of the second hierarchy level (E2) are assigned to a plant image of the first hierarchy level (E1),
- plant images of the second hierarchy level (E2) each assigned to the same plant image of the first hierarchy level(E1) are assigned to a sequence, in particular to a sequence with regard to a process engineering structure of the plant (1),
**characterised by** the following steps:
a) assigning to at least some of the plant images (62, 63) of the second hierarchy level (E2) in each case:
- hierarchy information (HI) with regard to a plant image of the first hierarchy level (E1), and
- sequence information (RI) with regard to a sequence with regard to other plant images of the second hierarchy level (E2) that are assigned to the same plant image of the first hierarchy level (E1), in particular to a sequence with regard to a process engineering structure of the plant (1), wherein this assignment takes place prior to the structured storage of the plant images,
b) outputting the plant images for selection,
c) recording selection information with regard to a selection of the plant images output in step b) for their subsequent structured interconnection with each other with regard to hierarchy and sequence,
d) outputting the plant images selected in step c) for their subsequent structured interconnection, wherein plant images with assigned hierarchy information (HI) and sequence information (RI) are automatically pre-structured according to the respective assigned hierarchy information (HI) and sequence information (RI).

2. Method according to claim 1, wherein at least some of the plant images with the assigned hierarchy and sequence information (HI, RI) relate to a modularised and preconfigured process engineering plant component (PU(MTP)1), in particular a module type package.

3. Method according to one of the preceding claims, wherein the plant images are defined by a technological hierarchy (20) of the plant (1).

4. Method according to claim 3, wherein the plant images are output in step b) in a structured manner according to the technological hierarchy (20) of the plant.

5. Method according to one of the preceding claims, wherein the plant image hierarchy (60) is generated in an engineering system (19) and wherein the hierarchy and sequence information (HI, RI) is assigned when importing plant images into the engineering system (19).

6. Method according to one of the preceding claims, wherein the selection information is defined by a move operation that can be performed by a project engineer.

7. Method according to one of the preceding claims, wherein only plant images that are not yet contained in the plant image hierarchy (60) are output for selection in step b).

8. Engineering system (19) for generating a plant image hierarchy (60), in which plant images (61, 62, 63) for operating and observing a process engineering plant (1) to be controlled are stored in a structured manner with regard to hierarchy and sequence and can be selected and opened by an operator during the runtime of the plant (1), wherein in the structured storage:
- the plant image hierarchy (60) comprises at least a first and a second hierarchy level (E1, E2),
- plant images of the second hierarchy level (E2) are assigned to a plant image of the first hierarchy level (E1),
- plant images of the second hierarchy level (E2) each assigned to the same plant image of the first hierarchy level(E1) are assigned to a sequence, in particular to a sequence with regard to a process engineering structure of the plant (1),
comprising at least one processor (26) which is connected to a storage device (25),
**characterised in that** the at least one processor (26) is configured so that it performs the method according to one of the preceding claims.

9. Computer program, comprising commands which when implementing the program by an engineering system (19) according to claim 8 cause said engineering system to perform the method according to one of claims 1 to 7.

10. Computer-readable storage medium comprising commands which when executed by an engineering system (19) according to claim 8 cause said engineering system to perform the method according to one of claims 1 to 7.

## Revendications

1. Procédé mis en œuvre par ordinateur de production d'une hiérarchie (60) d'images d'installations, dans lequel des images (61, 62, 63) d'installations sont, pour une commande et une observation d'une installation (1) de la technique des procédés à commander, archivées en ce qui concerne la hiérarchie et l'ordre et peuvent, pendant le temps de marche de l'installation (1), être choisies par un opérateur et être rendues publiques,
dans lequel dans l'archivage structuré
- la hiérarchie (60) d'images d'installations comprend au moins un premier et un deuxième plans (E1, E2) hiérarchiques,
- des images d'installations du deuxième plan (E2) hiérarchique sont associées à une image d'installation du premier plan (E1) hiérarchique,
- des images d'installations du deuxième plan (E2) hiérarchique, associées respectivement à une même image d'installation du premier plan (E1) hiérarchique, sont associées à un ordre, en particulier à un ordre en ce qui concerne une structure de la technique des procédés de l'installation (1),
**caractérisé par** les stades suivants :
a) association à au moins une partie des images (62, 63) d'installations du deuxième plan (E2) hiérarchique respectivement :
- d'une information (HI) de hiérarchie se rapportant à une image d'installation du premier plan (E1) hiérarchique, et
- d'une information (RI) d'ordre se rapportant à un ordre en ce qui concerne d'autres images d'installations du deuxième plan (E2) hiérarchique, qui sont associées à la . même image d'installation du premier plan (E1) hiérarchique, en particulier à un ordre se rapportant à une structure de la technique des procédés de l'installation (1), dans lequel cette association s'effectue avant l'archivage structuré des images d'installations,
b) émission des images d'installations pour un choix,
c) saisie d'informations de choix en ce qui concerne un choix des images d'installations émises au stade b) pour leur couplage structuré entre elles venant ensuite en ce qui concerne la hiérarchie et l'ordre,
d) émission des images d'installations choisies au stade c) pour leur couplage structuré venant ensuite, dans lequel des images, ayant une information (HI) de hiérarchie associée et une information (RI) d'ordre, sont préstructurées automatiquement et sont émises conformément à l'information (HI) de hiérarchie et à l'information (RI) d'ordre associées respectivement.

2. Procédé suivant la revendication 1, dans lequel au moins une partie des images d'installations ayant les informations (HI, RI) de hiérarchie et d'ordre associées, se rapporte à une partie (PU(MTP)1) d'installation de la technique de procédés modularisée et préconfigurée, en particulier à un module type package.

3. Procédé suivant l'une des revendications précédentes, dans lequel les images d'installations sont définies par une hiérarchie (20) technologique de l'installation (1).

4. Procédé suivant la revendication 3, dans lequel les images d'installations sont émises de manière structurée dans le stade b) conformément à la hiérarchie (20) technologique de l'installation. .

5. Procédé suivant l'une des revendications précédentes, dans lequel la production de la hiérarchie (60) d'images d'installations s'effectue dans un système (19) d'ingénierie, et dans lequel l'association des informations (HI, RI) de hiérarchie et d'ordre s'effectue, lors d'un apport des images d'installations au système (19) d'ingénierie.

6. Procédé suivant l'une des revendications précédentes, dans lequel les informations de choix sont définies par une opération de changement pouvant être réalisée par un projeteur.

7. Procédé suivant l'une des revendications précédentes, dans lequel dans le stade b) sont émises pour le choix, seulement des images d'installations, qui ne sont pas encore contenues dans la hiérarchie (60) d'images d'installations.

8. Système (19) d'ingénierie pour la production d'une hiérarchie (60) d'images d'installations, dans lequel des images (61, 62, 63) d'installations sont, pour une commande et une observation d'une installation (1) de la technique des procédés à commander, archivées en ce qui concerne la hiérarchie et l'ordre et peuvent, pendant le temps de marche de l'installation (1), être choisies par un opérateur et être rendues publiques,
dans lequel dans l'archivage structuré
- la hiérarchie (60) d'images d'installations comprend au moins un premier et un deuxième plans (E1, E2) hiérarchiques,
- des images d'installations du deuxième plan (E2) hiérarchique sont associées à une image d'installation du premier plan (E1) hiérarchique,
- des images d'installations du deuxième plan (E2) hiérarchique, associées respectivement à une même image d'installation du premier plan (E1) hiérarchique, sont associées à un ordre, en particulier à un ordre en ce qui concerne une structure de la technique des procédés de l'installation (1), .
comprenant au moins un processeur (26), qui est relié à une mémoire (25),
**caractérisé en ce que** le au moins un processeur (26) est ainsi configuré, qu'il exécute le procédé suivant l'une des revendications précédentes.

9. Programme d'ordinateur, comprenant des instructions, qui, lors de l'exécution du programme par un système (19) d'ingénierie suivant la revendication 8, font que celui-ci exécute le procédé suivant l'une des revendications 1 à 7.

10. Support de mémoire déchiffrable par ordinateur, comprenant des instructions, qui, lors de l'exécution par le système (19) d'ingénierie suivant la revendication 8, font que celui-ci exécute le procédé suivant l'une des revendications 1 à 7. .
